# FASCICULE DE BREVET EUROPEEN

(11) **EP 3 449 332 B1**
(45) Date de publication et mention de la délivrance du brevet: **02.12.2020**
(21) Numéro de dépôt: 17718937.0
(22) Date de dépôt: 25.04.2017
(51) Int. Cl.: G05D 23/13, F16K 11/078, F16K 11/00

(54) **UNITÉ DE MÉLANGE ET ROBINET MITIGEUR COMPRENANT UNE TELLE UNITÉ DE MÉLANGE**
MISCHEINHEIT UND MISCHBATTERIE, DIE EINE SOLCHE MISCHEINHEIT UMFASST
MIXING UNIT AND MIXING FAUCET COMPRISING THE SAME

(30) Priorité: 26.04.2016 FR 1653680
(43) Date de publication de la demande: 06.03.2019
(73) Titulaire: Vernet, 91340 Ollainville (FR)
(72) Inventeur: FASSOLETTE, Pierre-Olivier, 91100 Corbeil Essonnes (FR)
(74) Mandataire: Lavoix
(86) Numéro de dépôt international: PCT/EP2017/059716
(87) Numéro de publication internationale: WO 2017/186670

(56) Documents cités:
- EP-B1- 2 335 127
- DE-A1- 19 716 307

## Description

La présente invention concerne une unité de mélange pour un robinet mitigeur ainsi qu'un robinet mitigeur comprenant une telle unité de mélange.

L'invention se rapporte au domaine de la robinetterie d'usage sanitaire. En particulier, les robinets dits « mitigeurs » permettent d'émettre un flux mitigé d'eau courante par mélange d'un flux d'eau chaude et d'un flux d'eau froide au sein d'une cartouche montée dans le corps du robinet. Le débit respectif des flux d'eau froide et d'eau chaude admis dans la cartouche peuvent être réglés à l'aide d'un levier de commande, afin de permettre un réglage de la température du flux mitigé par rotation du levier autour d'un axe, et du débit du flux mitigé par rotation de levier autour d'un deuxième axe.

La cartouche comprend, dans la plupart des cas, une paire de disques céramiques ajourés, l'un étant fixe, et l'autre étant mobile sous l'action du levier tout en étant en contact plan, glissant et étanche avec le disque fixe. En fonction de la position du disque mobile sur le disque fixe, des canaux sont formés pour permettre l'admission des flux d'eau froide et chaude au sein de la cartouche, avec un débit plus ou moins important, et ainsi entraîner leur mélange pour la formation du flux mitigé.

Certaines cartouches connues peuvent être dotées d'un boîtier additionnel séparé, et qui est rapporté contre la cartouche. Par exemple, le brevet FR-B-2 876 433 décrit une cartouche pour un robinet mitigeur équipée d'un module thermostatique additionnel accouplé étanchement à la base de la cartouche. Le module thermostatique additionnel est pourvu de moyens thermostatiques permettant, lorsque la température du flux mitigé excède une valeur de seuil prédéterminée, d'obturer le passage d'eau chaude avant son entrée dans la cartouche, afin de limiter automatiquement la température du flux. L'ensemble formé par le robinet mitigeur et par le module thermostatique comprend à la fois des moyens de mélange, formés par les disques céramiques, alors les moyens thermostatiques comprennent un obturateur distinct de ces moyens de mélange, pour assurer des fonctions différentes.

Néanmoins, l'ajout d'un tel boîtier additionnel nécessite une étape d'assemblage de la cartouche avec le boîtier additionnel lors de la fabrication du robinet, qui rend la fabrication plus complexe et plus coûteuse. De plus, des moyens d'étanchéités entre la cartouche et le boîtier additionnel doivent être prévus, ce qui représente également un coût substantiel, sous peine d'un risque de fuite d'eau entre la cartouche et le boîtier additionnel.

EP 2 335 127 B1 décrit une unité de mélange thermostatique, comprenant une entrée d'eau froide, une entrée d'eau chaude, une sortie d'eau mitigée, une valve coulissante et des moyens thermostatiques sur lesquels la valve coulissante est montée. Cependant, cette unité de mélange ne comprend pas à la fois des moyens de mélange de l'eau chaude avec l'eau froide pour former le flux mitigé, et un obturateur du passage de l'eau chaude actionné par un élément thermostatique. Si les inconvénients susmentionnés, liés à l'assemblage et à la provision de moyens d'étanchéité, ne se posent pas pour cette unité de mélange connue, la fonction d'obturation du passage de l'eau chaude n'est pas assurée séparément de la fonction de mélange de l'eau chaude et de l'eau froide par la valve coulissante.

DE 197 16 307 A1 décrit un robinet mitigeur thermostatique comprenant une cartouche avec des entrées d'eau chaude et d'eau froide. La cartouche comprend, dans sa partie basse, un système de disques commandés par un levier du robinet, et qui permettent de régler le débit d'eau au niveau des entrées d'eau chaude et d'eau froide. Le robinet comprend également, au-dessus du système de disques, un élément thermostatique monté au sein de la cartouche, couplé à un obturateur. Toutefois, la cartouche de ce robinet connu forme un assemblage complexe nécessitant la mise en œuvre de nombreuses pièces et de nombreux moyens d'étanchéité.

En conséquence, l'invention vise à porter remède aux inconvénients de l'art antérieur en proposant une nouvelle unité de mélange qui est plus facile et moins coûteuse à fabriquer.

L'invention a pour objet une unité de mélange selon la revendication 1.

Grâce à l'invention, la pièce commune, formée d'un seul tenant au sein de l'unité de mélange, relie le boîtier additionnel et la chambre de mélange. L'unité de mélange forme ainsi un ensemble unitaire, la chambre de mélange étant délimitée en partie par le boîtier additionnel, en l'espèce par la pièce commune formant au moins une partie de ce dernier. Selon cette configuration, il n'est avantageusement pas nécessaire de prévoir une étape d'assemblage de la chambre de mélange avec le boîtier additionnel pour relier ces derniers. Ainsi, il n'est notamment pas nécessaire de prévoir des moyens d'étanchéité entre la chambre de mélange et le boîtier additionnel. Le nombre de pièces nécessaires pour fabriquer l'unité de mélange est avantageusement réduit. La fabrication d'un robinet mitigeur comprenant une telle unité de mélange est donc particulièrement simple, l'unité de mélange pouvant en outre être montée d'un bloc au sein du robinet mitigeur.

Selon d'autres caractéristiques avantageuses de l'invention, prises isolément ou en combinaison :
- L'unité de mélange comprend un organe de commande formé par un levier, monté mobile au sommet de la cartouche, pour commander les moyens de mélange et ainsi commander le débit respectif du premier flux entrant et du deuxième flux entrant.
- Les moyens de mélange comprennent un ensemble de disques de mélange contenus dans la chambre de mélange, de préférence trois disques de mélange, les disques de mélange étant en contact surfacique les uns avec les autres et s'étendent dans des plans orthogonaux à l'axe principal.
- La pièce commune forme un capot périphérique délimitant la chambre de mélange, lequel capot périphérique s'élève à partir de la paroi de séparation ;
- L'unité de mélange comprend une couronne de fermeture qui est rapportée sur le capot périphérique, à l'opposé de la paroi de séparation, pour fermer au moins partiellement la chambre de mélange ;
- L'unité de mélange comprend une couronne d'étanchéité de l'unité de mélange avec un corps de robinet mitigeur, la couronne d'étanchéité s'étendant dans un plan orthogonal par rapport à l'axe principal, la couronne d'étanchéité comprenant à la fois une gorge circulaire, qui est centrée sur l'axe principal et qui est formée par la pièce commune, et un joint d'étanchéité monté au sein de cette gorge circulaire ; et
- La partie mobile est mobile en translation par rapport à la partie thermosensible selon un axe d'obturation, et le plan orthogonal et l'axe d'obturation sont sécants, l'axe d'obturation étant incliné par rapport à ce plan orthogonal et le traversant.

L'invention concerne également un robinet mitigeur équipé d'une unité de mélange telle que définie ci-avant.

L'invention sera mieux comprise à la lecture de la description qui va suivre, donnée uniquement à titre d'exemple non limitatif et faite en se référant aux dessins dans lesquels :
- les figures 1 et 2 sont des coupes longitudinales d'un robinet mitigeur comprenant une unité de mélange selon un premier mode de réalisation conforme à l'invention ;
- la figure 3 est une vue d'un détail de la figure 1, à plus grande échelle, selon le cadre III ;
- la figure 4 est une vue en perspective du dessous de l'unité de mélange des figures 1 à 3, sur laquelle des plans I-I et II-II correspondent aux plans de coupe respectifs des figures 1 et 2 sont représentés ;
- la figure 5 est une vue, similaire à celle de la figure 1, d'un robinet mitigeur comprenant une unité de mélange selon un deuxième mode de réalisation conforme à l'invention.

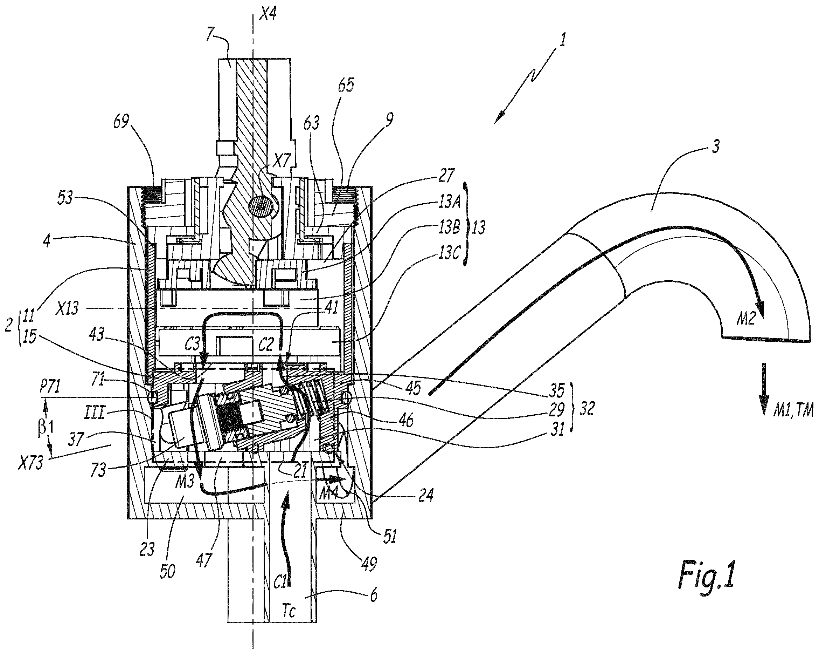

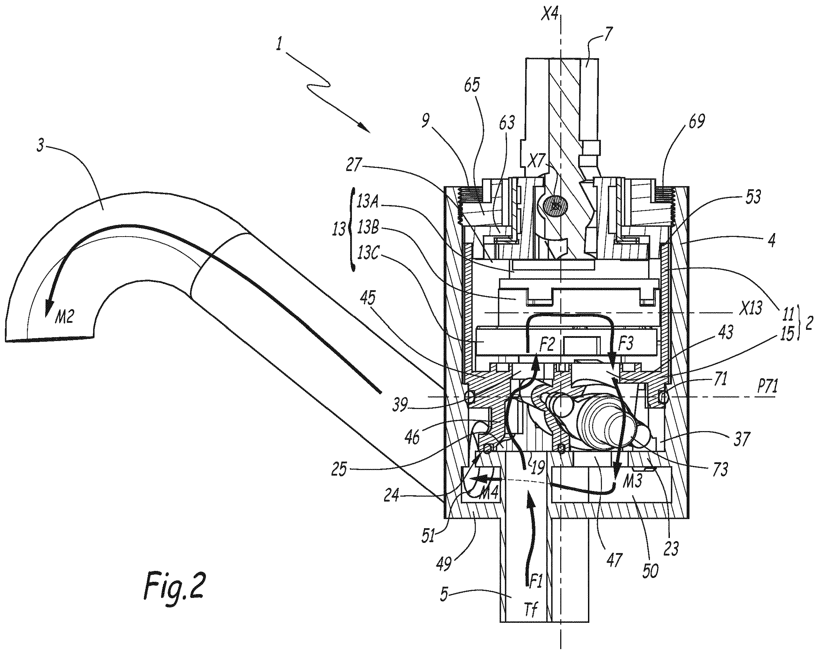

Les figures 1 et 2 illustrent un robinet mitigeur 1 dans lequel est insérée une unité de mélange 2 selon le premier mode de réalisation susmentionné. Le robinet mitigeur 1 est préférentiellement conçu pour être installé sur un bac du genre évier ou douche, ou plus généralement au sein d'une installation sanitaire. Le robinet mitigeur 1 comprend, de manière classique, un bec 3 à partir duquel un flux d'eau mitigé illustré par la flèche M1 est destiné à être émis. Le robinet 1 comprend également un corps 4, lequel forme un cylindre creux définissant un axe principal X4 qui est destiné, dans cet exemple, à être disposé verticalement lorsque le robinet est monté sur l'installation sanitaire.

Par commodité, la suite de la description est orientée par rapport à l'axe principal X4, en considérant que les termes « supérieur » et « haut » correspondent à une direction axiale tournée vers la partie haute de la figure 1, tandis que les termes « inférieur » et « bas » correspondent à une direction axiale de sens opposé.

En variante non illustrée, l'axe X4 est disposé selon une direction différente de la verticale et est par exemple horizontal.

Le bec 3 forme un conduit courbé qui s'étend à partir du corps 4 à l'oblique par rapport à l'axe principal X4, vers le haut, la courbure du bec 3 permettant d'orienter le flux d'eau mitigé M1 vers le bas. Le flux d'eau mitigé progresse ainsi à l'oblique vers le haut au sein du bec selon la flèche M2 jusqu'à l'extrémité libre de ce dernier.

Le robinet mitigeur 1 comprend également une arrivée d'eau froide 5 qui est visible à la figure 2, et une arrivée d'eau chaude 6 qui est visible à la figure 1, qui sont connectées au corps 4 au niveau d'une extrémité basse de ce dernier. L'arrivée d'eau froide 5 et l'arrivée d'eau chaude 6 sont prévues pour être connectées à des moyens d'alimentation en eau classiques de l'installation sanitaire, lesquels ne sont pas détaillés dans la présente description. L'eau froide progresse vers le haut dans l'arrivée 5, selon la flèche F1, à une température Tf. L'eau chaude progresse quant à elle vers le haut dans l'arrivée 6, selon la flèche C1, à une température Tc. Les flux C1 et F1 sont mélangés au sein du robinet mitigeur 1 pour former le flux M1, d'une température T_{M} comprise entre Tf et Tc, et de débit additionné des flux C1 et F1.

L'unité de mélange 2 est logée au sein du corps 4, en étant insérée dans ce dernier par l'intermédiaire d'une ouverture supérieure 9 du corps 4 le long de l'axe principal X4. C'est dans cette unité de mélange 2 qu'est effectué le mélange des flux entrants F1 et C1 pour former le flux sortant M1.

L'unité de mélange 2 présente une forme générale cylindrique coaxiale avec l'axe principal X4. L'unité de mélange 2 comprend d'une part une cartouche 11, qui renferme des moyens 13 de mélange du premier flux entrant F1 et du deuxième flux entrant C1 pour former le flux sortant M1, et d'autre part un boîtier additionnel 15.

L'unité de mélange comprend une pièce commune 46 monobloc, qui forme une partie de la cartouche 11 et une partie du boîtier 15. La pièce commune 46 constitue une pièce d'un seul tenant et est préférentiellement obtenue par moulage. La pièce commune 46 est par exemple en matière plastique.

La pièce commune 46 forme en particulier une paroi de séparation 45 de la cartouche 11 et du boîtier additionnel 15 qui s'étend dans un plan orthogonal à l'axe X4. Ainsi, la cartouche 11 est située en partie supérieure du corps 4, au-dessus du boîtier additionnel 15 qui est situé en partie inférieure du corps 4 et hors de cette cartouche 11, la pièce commune 46 formant l'ossature de la partie inférieure de l'unité de mélange 2.

La pièce commune 46 forme une face inférieure 24 du boîtier additionnel 15 par l'intermédiaire de laquelle l'unité 2 est en appui vers le bas contre une paroi d'appui 23 du corps 4.

La paroi d'appui 23 est sensiblement discoïde et s'étend radialement par rapport à l'axe principal X4. Les arrivées 5 et 6 des flux entrants F1 et C1 traversent la paroi d'appui 23 pour alimenter le boîtier additionnel 15 par la face inférieure 24. En pratique, les arrivées 5 et 6 sont respectivement connectées, de façon étanche, à une première entrée 19 du premier flux entrant F1, et à une deuxième entrée 21 du deuxième flux entrant C1 débouchant en surface de la face inférieure 24.

Tel qu'illustré à la figure 2, le premier flux entrant progresse selon la flèche F1 jusqu'à la première entrée 19 et poursuit sa course au travers du boîtier additionnel 15 de bas en haut selon la flèche F2 dans un conduit traversant 25 du boîtier additionnel 15 s'étendant parallèlement à l'axe principal X4 à partir de la première entrée 19. Le conduit traversant 25 guide le premier flux entrant F2 jusqu'à une chambre de mélange 27 de la cartouche 11, en traversant la paroi de séparation 45 qui délimite le bas de cette chambre de mélange 27. La chambre de mélange 27 est ainsi en partie délimitée par la pièce commune 46. Le conduit traversant 25 est formé par la pièce commune 46 et vient de matière avec la paroi 45.

Parallèlement, tel qu'illustré à la figure 1, le deuxième flux entrant entre dans le boîtier additionnel 15 par l'intermédiaire de la deuxième entrée 21, et circule de bas en haut selon la flèche C2 au travers du boîtier additionnel 15 dans un conduit en chicane 32 qui s'étend généralement de bas en haut à partir de la deuxième entrée 21. Ce conduit en chicane 32 est formé par la pièce commune 46, et vient de matière avec la paroi 45. Plus précisément, le conduit en chicane 32 comprend une première partie 31 sensiblement parallèle à l'axe principal X4 et s'étendant à partir de la deuxième entrée 21. Le conduit en chicane 32 comprend ensuite une partie obturable 29, par un obturateur 87 qui est décrit plus en détail ci-après, la partie obturable 29 prolongeant la première partie 31. Enfin, le conduit en chicane 32 comprend une troisième partie 35 sensiblement parallèle à l'axe principal X4 conduisant le deuxième flux entrant C2 jusqu'à la cartouche 11 et prolongeant la partie obturable 29. La partie obturable 29 s'étend de façon oblique par rapport à la première partie 31 et à la troisième partie 35 de sorte que le conduit en chicane 32 forme un « S ». La troisième partie 35 débouche dans la chambre de mélange 27. Ainsi, les deux flux entrant F2 et C2 sont admis au sein de la chambre de mélange 27 de la cartouche 11 pour y être mélangés et former un flux sortant M3 destiné à former le flux M1.

La chambre de mélange 27 comprend une entrée 39 pour le premier flux F2, une deuxième entrée 41 pour le deuxième flux C2, ainsi qu'une sortie 43 pour le flux sortant M3. Le conduit traversant 25 s'étend à partir de l'entrée 39 dans la continuité de cette dernière, et le conduit en chicane 32 s'étend à partir de l'entrée 41 dans la continuité de cette dernière, les entrées 39 et 41 étant ménagées au travers de la paroi de séparation 45. En l'espèce, la paroi de séparation 45 est de forme généralement discoïde centrée sur l'axe principal X4, les entrées 39 et 41 ainsi que la sortie 43 étant réparties autour de l'axe principal X4.

Dans l'exemple illustré, les moyens de mélange 13 comprennent un ensemble de disques de mélange 13A, 13B et 13C, qui sont contenus dans la chambre de mélange 27, comme cela est visible sur les figures 1 et 2. Les disques de mélange 13A, 13B et 13C sont en contact surfaciques les uns avec les autres et s'étendent dans des plans orthogonaux à l'axe principal X4. L'ensemble de disques de mélange comprend un disque supérieur 13A, un disque intermédiaire 13B et un disque inférieur 13C, les disques supérieur 13A et intermédiaire 13B étant mobiles par rapport au disque 13C qui est fixe, le disque intermédiaire 13B étant en contact glissant et étanche avec le disque 13C. Les disques intermédiaire 13B et inférieur 13C comprennent un système de canaux et d'ouïes, non représenté, qui est connecté aux entrées 39 et 41 ainsi qu'à la sortie 43 et qui, en fonction de la position relative des disques 13B et 13C, règle le débit respectif des flux entrants F2 et C2 admis au sein de l'ensemble de disques par les entrées 39 et 41. Tel que représentés par les flèches F3 et C3, les flux entrants circulent dans le système de canaux et d'ouïes et passent d'abord au travers du disque inférieur 13C, puis dans le disque intermédiaire 13B. Les flux entrants F3 et C3 circulent ensuite à nouveau au travers du disque inférieur 13C de haut en bas. Au cours de leur passage au sein des disques 13A, 13B et 13C, où les flux entrants F3 et C3 sont mis en contact pour être mélangés et former le flux sortant M3. Le flux sortant M3 est à température T_{M}, le rapport des débits des flux entrants F3 et C3 permettant de régler la température T_{M}, et la valeur des débits des flux entrants F3 et C3 permettant de régler le débit du flux sortant M3. En pratique, la section de passage des flux entrants F3 et C3 varie en fonction de la position relative des disques 13B et 13C, par mise en communication des canaux et des ouïes susmentionnés. Les disques céramiques et leur système de canaux ne sont pas décrits plus en détails car ils constituent des moyens de mélange bien connus en tant que tels, et décrits par exemple dans FR-B1-2 876 433. On comprend également que, même si l'on préfère la mise en œuvre d'une chambre de mélange à disques céramiques, tous moyens de mélange connus et habituellement mis en œuvre dans les cartouches pour robinets mitigeurs peuvent être utilisés à la place.

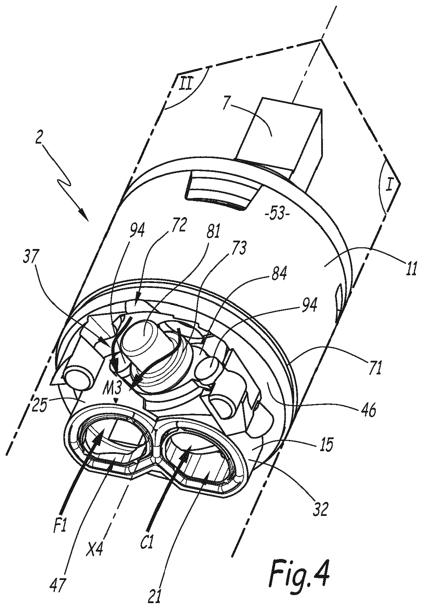

Le flux sortant M3 formé par mélange au sein de la chambre de mélange 27 est alors évacué hors de cette dernière, et hors de la cartouche 11, jusque dans une chambre de sortie 37 du robinet mitigeur 1, conduisant le flux sortant M3 de haut en bas jusqu'à une sortie 47 ménagée au travers de la paroi d'appui 23. Les arrivées 5 et 6 et la sortie 47 sont réparties autour de l'axe principal X4. La pièce commune 46 forme une couronne d'étanchéité 71 du boîtier 15. Cette couronne d'étanchéité 71 est de forme circulaire centrée sur l'axe principal X4. En l'espèce, la couronne d'étanchéité 71 s'étend dans un plan orthogonal P71 par rapport à l'axe X4, en faisant saillie de façon centrifuge par rapport à l'axe X4, à partir de la paroi de séparation 45 de manière à être en contact étanche le corps 4. Plus précisément, la couronne d'étanchéité 71 comprend une gorge circulaire ouverte radialement vers l'extérieur, formée par la pièce commune 46. Au de cette gorge circulaire est ménagé un joint d'étanchéité externe, par exemple de forme torique, qui est écrasé au contact du corps 4, comme illustré aux figures. La couronne d'étanchéité 71 délimite ainsi une partie supérieure de la chambre de sortie 37, cette dernière étant également délimitée latéralement par la paroi du corps 4, et en bas par la paroi d'appui 23. Comme cela est visible à la figure 4, la chambre de sortie 37, le conduit traversant 25 et le conduit en chicane 32 sont répartis régulièrement autour de l'axe principal X4. Tel qu'illustré aux figures 1 et 2, le flux sortant M3 est ainsi déversé au sein d'une chambre basse 50, du corps 4 par l'intermédiaire de la sortie 47. La chambre basse 50 est délimitée en haut par la paroi 23, latéralement par le corps 4 et en bas par un fond 49 du robinet mitigeur 1. Le fond 49 est sensiblement discoïde et orthogonal à l'axe principal X4, et ferme le corps 4 à l'extrémité inférieure de ce dernier. Dans la chambre basse 50, le flux sortant M3 est conduit, selon la flèche M4, jusqu'au bec 3, par l'intermédiaire d'une ouverture d'accès 51 ménagée dans la paroi du corps 4 radialement par rapport à l'axe principal X4, mettant en communication la chambre basse 50 avec le bec 3. Dans le bec 3, le flux sortant M4 devient le flux sortant M2, puis le flux sortant M1, mentionnés dans ce qui précède.

L'unité de mélange 2 comprend en outre un levier 7 qui est monté mobile au sommet de la cartouche 11, de manière à dépasser du corps 4 par l'intermédiaire de l'ouverture supérieure 9, pour permettre à un utilisateur d'actionner le levier 7. L'actionnement du levier 7 permet de commander les moyens de mélange 13, et en particulier de mouvoir les disques supérieur 13A et intermédiaire 13B en rotation autour d'un axe parallèle à l'axe principal X4, ou autour de l'axe X4 lui-même, et en translation selon un axe X13 qui est orthogonal à l'axe principal X4. De manière générale, le levier 7 forme un organe de commande pour actionner au moins l'un des disques 13A, 13B et 13C, et ainsi commander le débit respectif du premier flux entrant F1 et du deuxième flux entrant C1. Ainsi, l'organe de commande 7 permet de régler à la fois la température et le débit du flux sortant M1 par réglage de la position relative des disques de l'ensemble de disques 13A, 13B et 13C. Le robinet mitigeur 1 et la cartouche 11 peuvent ainsi être qualifiés de « monocommandes » dans la mesure où le levier 7 permet de commander à la fois le débit et la température du flux sortant M1 par réglage des débits des flux entrants F1 et C1. En pratique, le levier 7 est :
- pivotant autour de l'axe principal X4, ce qui entraîne une rotation des disques supérieur 13A et 13B autour de ce même axe, afin de régler le rapport entre le débit du premier et du deuxième flux entrants F1 et C1 et donc la température du flux sortant M1, et
- pivotant autour d'un deuxième axe X7 qui est orthogonal à l'axe principal X4 afin de translater les disques supérieurs 13A et 13B le long de l'axe X13 et de faire varier équitablement le débit du premier et du deuxième flux, pour régler le débit du flux sortant.

Le levier 7 est lié à l'ensemble de disques 13A, 13B et 13C, c'est-à-dire aux moyens de mélange 13, par un mécanisme de manœuvre qui n'est pas décrit plus en détail, dans la mesure où il est connu en tant que tel.

La pièce commune 46 forme également un capot périphérique 53 de la cartouche 11, qui forme une paroi d'enveloppe extérieure de la cartouche 11, sensiblement cylindrique à base circulaire autour de l'axe principal X4. Le capot 53 renferme les moyens de mélange 13, en délimitant latéralement la chambre 27 à partir de la paroi de séparation 45, de laquelle il s'élève le long de l'axe X4. Le capot 53 renferme également la base du levier 7, la cartouche comprenant une couronne de fermeture 63 délimitant le haut de la chambre 27 et étant rapportée sur une extrémité supérieure du capot 53 à l'opposé de la paroi de séparation 45. Un écrou 65, centré autour de l'axe principal X4, plaque l'unité de mélange 2 contre la paroi d'appui 23 par l'intermédiaire de la couronne de fermeture 63. En pratique, l'écrou 65 comporte un filetage extérieur qui est vissé dans un filetage intérieur 69 de l'ouverture supérieure 9 du corps 4, le filetage 69 étant centré sur l'axe X4. La chambre de mélange 27 est ainsi fermée en partie supérieure par la base du levier 7, son mécanisme et la couronne de fermeture 63.

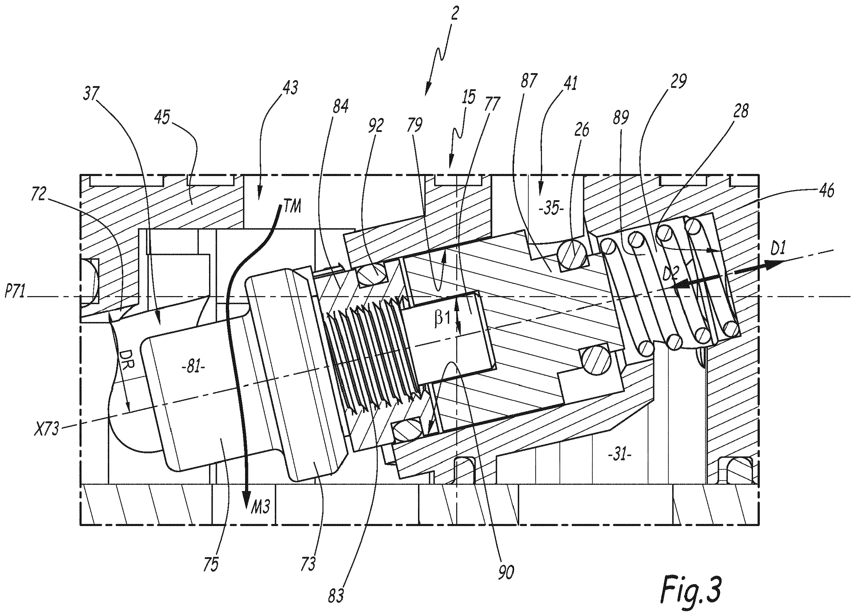

L'unité de mélange 2 comprend également des moyens thermostatiques, visibles notamment sur les figures 1 et 3, qui comprennent en premier lieu un élément thermostatique 73, s'étendant selon un axe d'obturation X73 compris dans le plan de la figure 1. L'axe d'obturation X73 et le plan orthogonal P71 sont sécants. En d'autres termes, l'axe d'obturation X73 est incliné par rapport à ce plan P71 et le traverse. La partie obturable 29 du conduit en chicane 32 s'étend sensiblement de façon coaxiale avec l'axe d'obturation X73. De préférence, l'axe d'obturation X73 forme un angle d'inclinaison β1 compris entre 1° et 45° avec le plan orthogonal P71, et de préférence égal à 13°.

Comme cela est notamment visible à la figure 3, le long de l'axe d'obturation X73, l'élément thermostatique 73 inclut une partie thermosensible 75 montée dans un logement 79 de la pièce commune 46. Le logement 79 est un conduit coaxial avec l'axe d'obturation X73, et qui est ménagé dans le boîtier additionnel 15 de façon à relier la chambre de sortie 37 et le conduit en chicane 32. Le logement 79 met ainsi en communication la sortie 47 avec la deuxième entrée 21.

La partie thermosensible 75 forme une partie fixe de l'élément thermostatique 73 et comprend en particulier, le long de l'axe d'obturation X73, une coupelle 81 qui dépasse du logement 79 et qui s'étend dans le passage du flux sortant M3, à la sortie 47. La coupelle 81 présente une forme généralement cylindrique à base circulaire centrée sur l'axe d'obturation X73, et renferme un corps thermo-dilatable qui est par exemple une cire adaptée. La coupelle 81 étant en contact avec le flux sortant M3, le corps thermo-dilatable se dilate et se contracte en fonction de la température T_{M} du flux sortant M3.

La partie thermosensible 75 comprend également un guide 83, qui prolonge la coupelle 81 le long de l'axe d'obturation X73, et par l'intermédiaire duquel la partie thermosensible 75 est montée dans le logement 79. Le guide 83 présente une forme de vis, avec un filetage extérieur, autour de l'axe d'obturation X73, et s'étend au moins en partie au sein du logement 79. En l'espèce, le guide 83 est vissé au sein d'une bague de support 84 pourvue d'un filetage intérieur, coaxial avec l'axe X73, la bague de support 84 étant elle-même fixée au sein d'une extrémité 90 du logement 79. L'extrémité 90 forme une partie extrémale du logement 79 s'étendant du côté de la sortie 47, en contact avec la chambre de sortie 37. La bague de support 84 est partiellement insérée dans l'extrémité 90, et présente une garniture d'étanchéité 92 avec le logement 79, de façon à obturer ce dernier de façon étanche et ainsi prévenir tout transfert d'eau du deuxième flux C2 dans la sortie 47 via le logement 79. La bague 84 de support est fixée au logement 79 à l'aide d'éléments de fixation 94 schématisés sur la figure 4, du genre vis. Les éléments de fixation 94 sont implantés dans une paroi de la chambre 37, laquelle forme la périphérie de l'extrémité 90. L'élément thermostatique 73 est ainsi logé dans le logement 79 de façon à obturer de manière étanche la communication entre la sortie 47 et la deuxième entrée 21.

L'élément thermostatique 73 comprend également une partie mobile 77, qui forme un piston cylindrique coaxial avec l'axe d'obturation X73. La partie mobile 77 est montée au sein du guide 83, de façon à pouvoir translater par rapport à la partie thermosensible 75 à l'écart de la partie thermosensible 75, en direction du conduit en chicane 32, selon l'axe d'obturation X73 sous l'action du corps thermo-dilatable contenu dans la coupelle 81.

Un obturateur 87, appartenant à l'élément thermostatique 73, est prévu au sein de la partie obturable 29, et est conçu pour être déplacé en translation selon l'axe d'obturation X73 par la partie mobile 77. L'obturateur 87 est agencé par rapport à la partie mobile 77 de manière à ce que cette dernière puisse pousser l'obturateur 87 jusqu'à une position d'obturation de la deuxième entrée 21, dans laquelle une garniture d'étanchéité 26 de l'obturateur 87, formée par exemple par un joint torique externe, vient obturer la partie obturable 29, au moins partiellement. En l'espèce, la partie mobile 77 est en contact avec l'obturateur 87 de façon à pousser ce dernier à l'écart de la partie thermosensible 75 dans une direction D1 parallèle à l'axe X73, sous l'action du corps thermodilatable contenu dans la coupelle 81. Du fait de l'inclinaison de l'axe X73 par rapport au plan P71, l'élément thermostatique 73 est plus éloigné des moyens de mélange 13 que ne l'est l'obturateur 87.

L'obturateur 87 est monté en compression entre l'extrémité libre de la partie mobile 77 et un ressort de rappel 89. Ce dernier est lui-même monté en compression entre l'obturateur 87 et une paroi opposée 28 de la partie obturable 29 du conduit en chicane 32. La paroi opposée 28 s'étend dans un plan orthogonal par rapport à l'axe X73. Le ressort de rappel 89 est donc un ressort de compression, conçu pour rappeler l'obturateur 87 dans une direction D2 opposée à D1, jusqu'à une position d'ouverture du conduit en chicane 32 et donc de la deuxième entrée 21.

L'obturateur 87 est donc configuré pour obturer la deuxième entrée 21 par obturation de la partie obturable 29, selon un degré d'obturation variable en fonction de la dilatation du corps thermo-dilatable, et donc de la température T_{M}, pour faire varier le débit du deuxième flux entrant C2 en conséquence. Lorsque la température T_{M} atteint un seuil prédéterminé, par exemple 50°C, le flux C2 est totalement, ou au moins partiellement, interrompu par obturation de la deuxième entrée 21.

L'unité de mélange 2 est configurée pour être insérée d'un seul tenant dans le corps 4 du robinet mitigeur 1 par l'intermédiaire de l'ouverture supérieure 9. Avant cette étape d'insertion de l'unité 2, la chambre de sortie 37 est ouverte et forme un espace de dégagement, du fait de l'absence du corps 4 du robinet mitigeur 1. Le montage de l'élément thermostatique 73 peut donc être effectué par insertion de ce dernier dans le logement 79 selon la direction D1, par l'extrémité 90, qui constitue dès lors une « extrémité d'insertion ». De façon préférentielle, l'espace de dégagement de la chambre 37 est conformé pour que l'élément thermostatique 73, l'obturateur 87 et le ressort 89 puissent être placés dans cet espace de dégagement, le long de l'axe X73, puis être poussés dans la direction D1 afin d'être insérés dans le logement 79 par l'extrémité d'insertion 90, sans nécessiter une séparation du boîtier additionnel 15 et de la cartouche 11. Cette configuration de la chambre 37 est rendue possible du fait de l'inclinaison de l'axe X73 par rapport au plan P71, grâce à laquelle les moyens thermostatiques passent à côté de la couronne d'étanchéité 71 lorsqu'ils sont mis en translation le long de l'axe X73 dans la chambre 37. Sans cette inclinaison de l'axe X73, la couronne d'étanchéité 71 s'opposerait au libre débattement des moyens thermostatiques susmentionnés le long de l'axe X73 au sein de la chambre 37. On comprend que l'angle d'inclinaison β1 de l'axe X73 par rapport au plan P71 est choisi de façon à ce que, les moyens d'étanchéité n'interfèrent pas avec ladite couronne d'étanchéité 71.

Une encoche 72, visible sur les figures 3 et 4, est ménagée dans la couronne d'étanchéité 71 en un point de la circonférence de cette dernière. Cette encoche 72 présente un profil cylindrique coaxial avec l'axe X73, et présente un rayon DR. Le rayon DR est supérieur à l'encombrement radial, c'est-à-dire au rayon maximal par rapport à l'axe X73, des moyens thermostatiques. Lorsque les moyens thermostatiques susmentionnés sont montés au sein du logement 79, ils sont traversés par le plan P71 et entourés par la couronne d'étanchéité 71. De manière générale, pour permettre le dégagement des moyens thermostatiques, on prévoit que l'espace de dégagement s'étende au moins sur un cylindre coaxial avec l'axe X73, débutant au niveau de l'extrémité d'insertion 90 en direction de la chambre de sortie 37 et présentant un rayon égal au rayon DR.

Enfin, l'inclinaison de l'axe X73 implique que la couronne d'étanchéité 71 peut être placée à une distance relativement faible de la face inférieure 24, en dépit de l'encombrement des moyens thermostatiques et des contraintes liées à leur montage au sein de l'unité de mélange 2. Ainsi, cette unité de mélange 2 est particulièrement compacte et est adaptée à la géométrie des robinets mitigeurs existants.

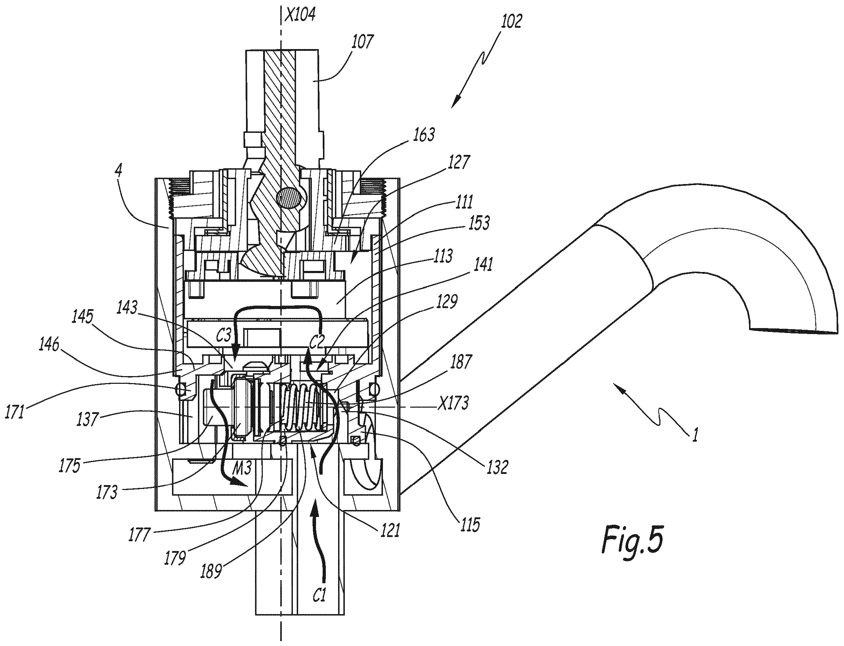

La figure 5 illustre une unité de mélange 102 conforme à un deuxième mode de réalisation et qui présente des caractéristiques similaires avec l'unité de mélange 2 du premier mode de réalisation décrit ci-avant, illustrée aux figures 1 à 4, ces caractéristiques similaires étant désignées par un tracé identique sur le dessin, et/ou des numéros de référence augmentés de 100. La description qui suit est donc centrée sur les différences entre le premier et le deuxième mode de réalisation.

Tout comme l'unité de mélange 2, l'unité de mélange 102 comprend une première entrée pour un premier flux entrant, non visibles sur la figure 5, ainsi qu'une deuxième entrée 121 pour un deuxième flux entrant C1. A partir de la deuxième entrée 121 s'étend un conduit en chicane 132, avec une partie obturable 129. Le conduit en chicane 132 s'étend jusqu'à une première entrée 141 d'une chambre de mélange 127. L'unité 102 comprend également des moyens de mélange 113 pour former un flux sortant M3, une sortie 143 avec une chambre de sortie 137 et un logement 179. L'unité de mélange 102 comprend également un organe de commande 107, des moyens thermostatiques comprenant d'une part un élément thermostatique 173 incluant à la fois une partie thermosensible 175 et une partie mobile 177, et d'autre part un obturateur 187, avec un ressort de rappel 189. La partie mobile et l'obturateur 187 sont mobiles en translation selon un axe d'obturation X173, orthogonal à un axe principal X104 défini par la forme générale cylindrique de l'unité de mélange 102.

L'unité de mélange 102 est intégrée dans le même corps 4 de robinet mitigeur 1 que celui des figures 1 à 4. L'unité de mélange 102 comprend une cartouche 111 et un boîtier additionnel 115, une pièce commune 146 formant une partie de la chambre de mélange 127, disposée au sein de la cartouche 111, et une partie du boîtier additionnel 115. La pièce 146 forme une couronne d'étanchéité 171 de l'unité de mélange 2 avec le corps 4 du robinet mitigeur 1, la couronne 171 faisant saillie de façon centrifuge par rapport à l'axe principal X104. La pièce 145 forme également, d'un seul tenant, un capot 153 de la cartouche 111, le conduit en chicane 132, la chambre de sortie 137 et le conduit traversant, non visible sur la figure 5. Le capot 153 est partiellement fermé par une couronne de fermeture 163 rapportée.

Les unités de mélange 2 et 102 sont particulièrement faciles à fabriquer et à monter dans le corps 4 du robinet 1, dans la mesure où il n'est pas nécessaire de procéder à l'assemblage d'un boîtier additionnel sur une cartouche avant introduction dans ledit corps 4, le boîtier additionnel et la cartouche formant un ensemble unitaire. Le nombre de pièces nécessaires pour fabriquer l'unité de mélange 2 est avantageusement réduit.

Dans ce qui précède, on met en œuvre des flux d'eau. Toutefois, d'autres fluides peuvent être utilisés en lieu et place de l'eau, de préférence des flux de fluides liquides. De manière générale, l'arrivée 5 correspond à une arrivée d'un premier flux entrant F1 de fluide présentant une première température Tf, alors que l'arrivée 6 correspond à une arrivée d'un deuxième flux entrant C1 de fluide présentant une deuxième température Tc qui est supérieure à la première température Tf. Les fluides du premier flux entrant F1 et du deuxième flux entrant C1 sont préférentiellement identiques et liquides, mais peuvent toutefois être de nature différente. L'eau s'échappant du bec 3 correspond ainsi à un flux sortant M1 de fluide, qui est formé par mélange des premier et deuxième flux entrant F1 et C1 au sein du robinet mitigeur 1.

Les modes de réalisations et variantes définis ci-dessus pourront être combinés pour créer de nouveaux modes de réalisation.

## Revendications

1. Unité de mélange (2; 102) pour un robinet mitigeur (1), l'unité de mélange présentant une forme générale cylindrique définissant un axe principal (X4 ; X104) de l'unité de mélange, l'unité de mélange comprenant :
- une cartouche (11 ; 111), incluant une chambre de mélange (27; 127), traversée par l'axe principal, la chambre de mélange comprenant :
∘ une première entrée (39) d'un premier flux entrant (F2) de fluide présentant une première température (Tf),
∘ une deuxième entrée (41) d'un deuxième flux entrant (C2) de fluide présentant une deuxième température (Tc) supérieure à la première température, et
∘ une sortie (43; 143), hors de la chambre de mélange, pour un flux sortant (M3) de fluide,
- des moyens de mélange (13) des premier et deuxième flux entrants pour former le flux sortant, les moyens de mélange étant contenus dans la chambre de mélange,
- un boîtier additionnel (15; 115), s'étendant hors de la chambre de mélange et hors de la cartouche (11 ; 111), la cartouche étant destinée à être située en partie supérieure d'un corps (4) du robinet mitigeur (1), au-dessus du boîtier additionnel (15 ; 115), qui est destiné à être situé en partie inférieure du corps (4), le boîtier additionnel étant traversé par l'axe principal, et ménageant :
∘ un conduit traversant (25), qui s'étend à partir de la première entrée (39) de la cartouche (11 ; 111) ;
∘ un conduit en chicane (32 ; 132), qui s'étend à partir de la deuxième entrée (41) de la cartouche (11 ; 111) ; et
∘ un logement (79 ; 179), qui est un conduit coaxial avec un axe d'obturation (X73 ; X173), et qui est ménagé dans le boîtier additionnel (15 ; 115) de façon à relier le conduit en chicane (32 ; 132) et une chambre de sortie (37 ; 137) du robinet mitigeur (1), le flux sortant (M3) formé par mélange au sein de la chambre de mélange (27 ; 127) étant évacué hors de la chambre de mélange et hors de la cartouche jusque dans la chambre de sortie (37) ;
- des moyens thermostatiques, qui sont montés au sein du boîtier additionnel et comprennent :
∘ un élément thermostatique (73; 173), qui est monté dans le logement (79 ; 179), qui comprend à la fois une partie thermosensible (75; 175) disposée au moins partiellement à la sortie, et une partie mobile (77) en translation par rapport à la partie thermosensible, et
∘ un obturateur (87 ; 187) de la deuxième entrée, lié en translation à la partie mobile en translation, le conduit en chicane étant configuré pour être obturé par l'obturateur (87 ; 187),
**caractérisée en ce que** l'unité de mélange comprend en outre :
- une pièce commune (46 ; 146) monobloc, qui délimite au moins partiellement la chambre de mélange (27; 127) tout en formant au moins une partie du boîtier additionnel (15; 115), la pièce commune (46) formant une paroi de séparation (45) de la cartouche (11) et du boîtier additionnel (15 ; 115), la paroi de séparation (45) s'étendant dans un plan orthogonal à l'axe principal (X4) et délimitant le bas de la chambre de mélange (27 ; 127), la première entrée (39), la deuxième entrée (41) et la sortie (43; 143), étant ménagées au travers de la paroi de séparation en étant réparties autour de l'axe principal, la pièce commune (46; 146) formant le conduit traversant (25), le conduit en chicane (32 ; 132) et le logement (79 ; 179).

2. Unité de mélange (2; 102) selon la revendication 1, **caractérisée en ce que** l'unité de mélange comprend un organe de commande (7 ; 107) formé par un levier, monté mobile au sommet de la cartouche (11 ; 111), pour commander les moyens de mélange (13) et ainsi commander le débit respectif du premier flux entrant et du deuxième flux entrant

3. Unité de mélange (2; 102) selon l'une quelconque des revendications précédentes, **caractérisé en ce que** les moyens de mélange (13) comprennent un ensemble de disques de mélange (13A, 13B, 13C) contenus dans la chambre de mélange (27 ; 127), de préférence trois disques de mélange (13A, 13B, 13C), les disques de mélange étant en contact surfacique les uns avec les autres et s'étendent dans des plans orthogonaux à l'axe principal (X4 ; X104).

4. Unité de mélange (2; 102) selon l'une quelconque des revendications précédentes, **caractérisée en ce que** la pièce commune (46; 146) forme un capot périphérique (53 ; 153) délimitant la chambre de mélange (27; 127), lequel capot périphérique s'élève à partir de la paroi de séparation (45).

5. Unité de mélange (2; 102) selon la revendication 4, **caractérisée en ce que** l'unité de mélange comprend une couronne de fermeture (63 ; 163) qui est rapportée sur le capot périphérique (53 ; 153), à l'opposé de la paroi de séparation (45 ; 145), pour fermer au moins partiellement la chambre de mélange (27; 127).

6. Unité de mélange (2; 102) selon l'une quelconque des revendications précédentes, **caractérisée en ce que** l'unité de mélange comprend une couronne d'étanchéité (71 ; 171) de l'unité de mélange avec le corps (4) de robinet mitigeur (1), la couronne d'étanchéité s'étendant dans un plan orthogonal (P71) par rapport à l'axe principal, la couronne d'étanchéité comprenant à la fois une gorge circulaire, qui est centrée sur l'axe principal et qui est formée par la pièce commune (46 ; 146), et un joint d'étanchéité monté au sein de cette gorge circulaire.

7. Unité de mélange (2) selon la revendication 6, **caractérisée en ce que** :
- la partie mobile (77) est mobile en translation par rapport à la partie thermosensible (75) selon l'axe d'obturation (X73), et
- le plan orthogonal (P71) et l'axe d'obturation sont sécants, l'axe d'obturation étant incliné par rapport à ce plan orthogonal et le traversant.

8. Robinet mitigeur (1) équipé d'une unité de mélange (2; 102) conforme à l'une quelconque des revendications précédentes.

## Patentansprüche

1. Mischeinheit (2; 102) für eine Mischbatterie (1), wobei die Mischeinheit eine generell zylindrische Form aufweist, durch die eine Hauptachse (X4; X104) der Mischeinheit definiert ist, wobei die Mischeinheit Folgendes umfasst:
- eine eine Mischkammer (27, 127), durch welche die Hauptachse verläuft, umfassende Kartusche (11; 111), wobei die Mischkammer Folgendes umfasst:
∘ einen ersten Einlass (39) für einen eine erste Temperatur (Tf) aufweisenden ersten einfließenden Fluidstrom (F2),
∘ einen zweiten Einlass (41) für einen eine zweite Temperatur (Tc), die höher als die erste Temperatur ist, aufweisenden zweiten einfließenden Fluidstrom (C2) und
∘ einen aus der Mischkammer hinausführenden Auslass (43; 143) für einen ausfließenden Fluidstrom (M3),
- Mischeinrichtungen (13) zum Mischen des ersten und zweiten einfließenden Stroms zum Ausbilden des ausfließenden Stroms, wobei die Mischeinrichtungen in der Mischkammer enthalten sind,
- ein sich außerhalb der Mischkammer und außerhalb der Kartusche (11, 111) erstreckendes zusätzliches Gehäuse (15; 115), wobei die Kartusche zur Anordnung im oberen Teil eines Körpers (4) der Mischbatterie (1), oberhalb des zur Anordnung im unteren Teil des Körpers (4) vorgesehenen zusätzlichen Gehäuses (15; 115), bestimmt ist, wobei die Hauptachse durch das zusätzliche Gehäuse verläuft und das zusätzliche Gehäuse Folgendes ausbildet:
∘ ein sich von dem ersten Einlass (39) der Kartusche (11; 111) aus erstreckendes Durchflussrohr (25);
∘ ein sich von dem zweiten Einlass (41) der Kartusche (11; 111) aus erstreckendes Rohr mit Verschlusskammer (32; 132); und
∘ eine Aufnahme (79; 179), die als ein koaxiales Rohr mit einer Verschlussachse (X73; X173) ausgebildet ist und die in dem zusätzlichen Gehäuse (15; 115) ausgebildet ist, um das Rohr mit Verschlusskammer (32; 132) und eine Auslasskammer (37; 137) der Mischbatterie (1) miteinander zu verbinden, wobei der durch Mischen in der Mischkammer (27; 127) gebildete ausfließende Strom (M3) aus der Mischkammer und aus der Kartusche in die Auslasskammer (37) abgeleitet wird;
- Thermostateinrichtungen, die in dem zusätzlichen Gehäuse montiert sind und Folgendes umfassen:
∘ ein Thermostatelement (73; 173), das in der Aufnahme (79; 179) montiert ist und das sowohl ein zumindest teilweise am Auslass angeordnetes wärmesensitives Teil (75; 175) als auch ein bewegbares Teil (77), das durch Verschiebung relativ zu dem wärmesensitiven Teil bewegbar ist, umfasst, und
∘ eine Verschlussvorrichtung (87; 187) des zweiten Einlasses, die verschiebbar mit dem durch Verschiebung bewegbaren Teil verbunden ist, wobei das Rohr mit Verschlusskammer dazu ausgebildet ist, durch die Verschlussvorrichtung (87; 187) verschlossen zu werden,
**dadurch gekennzeichnet, dass** die Mischeinheit des Weiteren Folgendes umfasst:
- ein gemeinsames Teil (46; 146) aus einem Stück, das die Mischkammer (27; 127) zumindest teilweise begrenzt und dabei zumindest einen Teil des zusätzlichen Gehäuses (15; 115) bildet, wobei das gemeinsame Teil (46) eine Trennwand (45) zum Trennen der Kartusche (11) und des zusätzlichen Gehäuses (15; 115) bildet, wobei sich die Trennwand (45) in einer Ebene orthogonal zur Hauptachse (X4) erstreckt und den unteren Teil der Mischkammer (27; 127) begrenzt, wobei der erste Einlass (39), der zweite Einlass (41) und der Auslass (43; 143) durch die Trennwand hindurchgehend ausgebildet sind und um die Hauptachse herum angeordnet sind, wobei das gemeinsame Teil (46; 146) das Durchflussrohr (25), das Rohr mit Verschlusskammer (32; 132) und die Aufnahme (79; 179) bildet.

2. Mischeinheit (2; 102) nach Anspruch 1, **dadurch gekennzeichnet, dass** die Mischeinheit ein als ein Hebel ausgebildetes Bedienteil (7; 107) umfasst, das an der Oberseite der Kartusche (11; 111) bewegbar angebracht ist, um die Mischeinrichtungen (13) zu steuern und somit die jeweilige Durchflussmenge des ersten einfließenden Stroms und des zweiten einfließenden Stroms zu steuern.

3. Mischeinheit (2; 102) nach einem der vorangehenden Ansprüche, **dadurch gekennzeichnet, dass** die Mischeinheiten (13) einen in der Mischkammer (27; 127) enthaltenen Mischscheibensatz (13A, 13B, 13C), vorzugsweise drei Mischscheiben (13A, 13B, 13C), umfassen, wobei die Mischscheiben an den Oberflächen aneinander anliegen und sich in zur Hauptachse (X4; X104) orthogonalen Ebenen erstrecken.

4. Mischeinheit (2; 102) nach einem der vorangehenden Ansprüche, **dadurch gekennzeichnet, dass** das gemeinsame Teil (46; 146) eine Umfangsabdeckung (53; 153) bildet, die die Mischkammer (27; 127) begrenzt, wobei sich die Umfangsabdeckung von der Trennwand (45) ausgehend nach oben erstreckt.

5. Mischeinheit (2; 102) nach Anspruch 4, **dadurch gekennzeichnet, dass** die Mischeinheit der Trennwand (45; 145) gegenüberliegend eine Verschlusskappe (63; 163) umfasst, die auf die Umfangsabdeckung (53; 153) aufgesteckt ist, um die Mischkammer (27; 127) zumindest teilweise zu verschließen.

6. Mischeinheit (2; 102) nach einem der vorangehenden Ansprüche, **dadurch gekennzeichnet, dass** die Mischeinheit einen Dichtungsring (71; 171) zur Abdichtung der Mischeinheit gegenüber dem Körper (4) der Mischbatterie (1) umfasst, wobei der Dichtungsring sich in einer zur Hauptachse orthogonalen Ebene (P71) erstreckt und wobei der Dichtungsring sowohl eine auf die Hauptachse zentrierte und aus dem gemeinsamen Teil (46; 146) ausgebildete kreisförmige Nut als auch eine in der kreisförmigen Nut montierte Dichtung umfasst.

7. Mischeinheit (2; 102) nach Anspruch 6,
**dadurch gekennzeichnet, dass**:
- das bewegbare Teil (77) relativ zum wärmeempfindlichen Teil (75) entlang der Verschlussachse (X73) durch Verschiebung bewegbar ist, und
- die orthogonale Ebene (P71) und die Verschlussachse schneidend sind, wobei die Verschlussachse relativ zur orthogonalen Ebene geneigt ist und durch sie hindurchgeht.

8. Mischbatterie (1), ausgestattet mit einer Mischeinheit (2; 102) nach einem der vorangehenden Ansprüche.

## Claims

1. Mixing unit (2; 102) for a mixer tap (1), the mixing unit having a generally cylindrical shape defining a main axis (X4; X104) of the mixing unit, the mixing unit comprising:
- a cartridge (11; 111), including a mixing chamber (27; 127), passed through by the main axis, the mixing chamber comprising:
∘ a first inlet (39) for a first incoming stream (F2) of fluid having a first temperature (Tf),
∘ a second inlet (41) for a second incoming stream (C2) of fluid having a second temperature (Tc) which is greater than the first temperature, and
∘ an outlet (43; 143), outside the mixing chamber, for an outgoing stream (M3) of fluid,
- mixing means (13) for mixing the first and second incoming streams to form the outgoing stream, the mixing means being contained in the mixing chamber,
- an additional casing (15; 115), extending outside the mixing chamber and outside the cartridge (11; 111), the cartridge being intended to be situated in the top portion of a body (4) of the mixer tap (1), above the additional casing (15; 115), which is intended to be situated in the bottom portion of the body (4), the additional casing being passed through by the main axis, and forming:
∘ a through-conduit (25) which extends starting from the first inlet (39) of the cartridge (11; 111);
∘ a chicane-like conduit (32; 132) which extends starting from the second inlet (41) of the cartridge (11; 111); and
∘ a housing (79; 179), which is a conduit coaxial with a closure axis (X73; X173), and which is formed in the additional casing (15; 115) so as to connect the chicane-like conduit (32; 132) and an outlet chamber (37; 137) of the mixer tap (1), the outgoing stream (M3) formed by mixing within the mixing chamber (27; 127) being discharged outside the mixing chamber and outside the cartridge into the outlet chamber (37);
- thermostatic means which are mounted within the additional casing and comprise:
∘ a thermostatic element (73; 173), which is mounted in the housing (79; 179), which comprises both a thermosensitive part (75; 175) arranged at least in part at the outlet, and a part (77) which is movable in translation relative to the thermosensitive part, and
∘ a closure member (87; 187) for the second inlet which is connected in translation to the part that is movable in translation, the chicane-like conduit being configured to be closed by the closure member (87; 187),
**characterised in that** the mixing unit further comprises:
- a common one-piece part (46; 146) which delimits at least in part the mixing chamber (27; 127) while forming at least a portion of the additional casing (15; 115), the common part (46) forming a separating wall (45) separating the cartridge (11) and the additional casing (15; 115), the separating wall (45) extending in a plane orthogonal with respect to the main axis (X4) and delimiting the bottom of the mixing chamber (27; 127), the first inlet (39), the second inlet (41) and the outlet (43; 143) being formed through the separating wall while being distributed around the main axis, the common part (46; 146) forming the through-conduit (25), the chicane-like conduit (32; 132) and the housing (79; 179).

2. Mixing unit (2; 102) according to claim 1, **characterised in that** the mixing unit comprises a control member (7; 107) formed by a lever, movably mounted at the top of the cartridge (11; 111), for controlling the mixing means (13) and thus controlling the respective flow rate of the first incoming stream and of the second incoming stream.

3. Mixing unit (2; 102) according to any one of the preceding claims, **characterised in that** the mixing means (13) comprise a set of mixing discs (13A, 13B, 13C) contained in the mixing chamber (27; 127), preferably three mixing discs (13A, 13B, 13C), the mixing discs being in surface contact with one another and extend in planes orthogonal with respect to the main axis (X4; X104).

4. Mixing unit (2; 102) according to any one of the preceding claims, **characterised in that** the common part (46; 146) forms a peripheral cover (53; 153) delimiting the mixing chamber (27; 127), which peripheral cover rises starting from the separating wall (45).

5. Mixing unit (2; 102) according to claim 4, **characterised in that** the mixing unit comprises a closing ring (63; 163) which is attached to the peripheral cover (53; 153), opposite the separating wall (45; 145), for at least partially closing the mixing chamber (27; 127).

6. Mixing unit (2; 102) according to any one of the preceding claims, **characterised in that** the mixing unit comprises a sealing ring (71; 171) for sealing the mixing unit with the body (4) of the mixer tap (1), the sealing ring extending in an orthogonal plane (P71) with respect to the main axis, the sealing ring comprising both a circular groove, which is centred on the main axis and which is formed by the common part (46; 146), and a seal mounted within the circular groove.

7. Mixing unit (2) according to claim 6,
**characterised in that**:
- the movable part (77) is movable in translation relative to the thermosensitive part (75) along the closure axis (X73), and
- the orthogonal plane (P71) and the closure axis intersect, the closure axis being inclined relative to the orthogonal plane and passing through it.

8. Mixer tap (1) equipped with a mixing unit (2; 102) according to any one of the preceding claims.
